# EUROPEAN PATENT SPECIFICATION

(11) **EP 4 405 241 B1**
(45) Date of publication and mention of the grant of the patent: **06.05.2026**
(21) Application number: 22789534.9
(22) Date of filing: 16.09.2022
(51) Int. Cl.: B63B 1/04, B63B 5/24, B63B 21/50

(54) **FLOATING PLATFORM FOR A WIND TURBINE**
SCHWIMMENDE PLATTFORM FÜR EINE WINDTURBINE
PLATEFORME FLOTTANTE POUR UNE ÉOLIENNE

(30) Priority: 24.09.2021 EP 21198965
(43) Date of publication of application: 31.07.2024
(73) Proprietor: École Polytechnique Fédérale de Lausanne (EPFL), 1015 Lausanne (CH)
(72) Inventor: VASSILOPOULOS, Anastasios, 1022 Chavannes-Renens (CH)
(74) Representative: M. Zardi & Co S.A.
(86) International application number: PCT/EP2022/075764
(87) International publication number: WO 2023/046586

(56) References cited:
- EP-A1- 3 339 634
- WO-A1-2019/102188
- WO-A1-2020/101077
- WO-A2-2011/057940
- US-A1- 2010 041 289
- US-B2- 10 598 155

## Description

### Field of application

The present invention relates to the field of the offshore wind energy production; particularly the invention relates to a floating platform for a wind turbine.

### Prior art

Offshore wind turbines can benefit from a more constant and undisturbed flow of air compared to on-land wind turbines. For this reason, the offshore market is experiencing a significant growth and is expected to move faster in the near future.

However, the offshore installation requires a suitable platform and the current technique of platforms for wind turbines is not fully satisfactory. The conventional platforms for wind turbines are designed on the basis of the experience gained with platforms for the oil and gas industry. Nevertheless, the requirements of oil and gas industry are much different from those of the wind energy industry. The adaptation to wind energy application of a platform originally designed for oil/gas application results in a in massive and expensive structure increasing the capital cost and the operational cost of offshore wind farms.

In most cases, the platform of wind turbines is made of concrete and/or steel. Both materials however have disadvantages. Concrete is heavy, which complicates the transportation and deployment of the platform or parts thereof. Steel may suffer from corrosion in seawater; special steels resistant to corrosion in seawater are available but are generally expensive.

The turbine is typically mounted on a tower. The connection between the tower and the platform is another crucial feature; the prior art typically uses metal parts, such as metal flanges, with the problems outlined above of corrosion, unless very expensive materials are used.

Furthermore, the conventional platforms are generally fixed platforms which are unable to rotate in order to point the turbine in the direction of the wind. This disadvantage can be obviated by installing a wind turbine with a rotating head, which however increases the cost and complication of the turbine.

EP 2 668 090 describes a floating platform which may be used for a wind turbine. It has the drawback, however, of an asymmetric position of the wind turbine with respect to the structure. A floating platform for a wind turbine is also described in US 10,598,155.

WO 2011/057940 discloses a floating off-shore wind turbine.

EP 3 339 634 discloses a system for generating electric power and hydrogen including a floating platform, a wind turbine, a generator of electrical power, an electrolyzer for producing hydrogen and a hydrogen storage.

### Summary of the invention

The purpose of the invention is to overcome the above disadvantages and limitations of the prior art. The invention addresses the production of electric power and hydrogen with off-shore wind turbines. Among others, the invention addresses the need to provide a floating platform for an off-shore wind turbine having a lighter structure than the current platforms, a seamless assembly, a competitive manufacturing cost, a low maintenance required. A further aim of the invention is a platform easily orientable so that the wind turbine can point to the direction of the wind to maximize the output.

The above problem is solved with a system for generation of electric power and hydrogen according to the claims.

The platform comprises a vertically arranged support and a toroidal body arranged horizontally and coaxially around said support, so that a vertical axis of the support passes through the centre of the toroidal body. The support has an upper portion with a connection seat for the tower of a wind turbine and a lower portion which extends below the toroidal body. The platform further comprises a plurality of connection arms which extends radially to connect the support to the toroidal body; at least one of the support, the toroidal body and the connection arms is made of a reinforced composite material.

The invention has, among others, the following advantages: the use of composites provides a seamless assembly of the various subparts, increasing the aesthetic appeal of the structure and reducing weak points induced by a riveted or bolted assembly. Composite materials are much lighter than steel/concrete, offering comparative advantages for the dragging from the shore to the site of installation; furthermore the installation is possible with smaller lifting equipment.

Composite materials have better environmental footprint compared to steel and concrete; particularly in maritime installation they do not corrode and do not release heavy metals and toxic chemicals to the sea. The composite structure needs much less maintenance compared to the steel/concrete counterparts.

The use of a composite (light weight) wind turbine tower can affect positively the system dynamic behaviour since the entire structure will be more flexible that the stiff metallic structures.

The axis-symmetric shape of the inventive platform with a central main cylinder surrounded by a toroidal body provides a stable buoyancy, a symmetric distribution of loads, an easy rotation of the whole structure to follow the wind. Furthermore the platform can be easily moored e.g. with a mooring line or a mooring chain connected to one of the radial arms.

The central position of the wind turbine tower is also advantageous in terms of stability and even distribution of loads. Still another interesting feature of the invention is that the tower of the wind turbine is practically an extension of the central main cylinder of the platform, which is surrounded by the toroidal element.

It is also disclosed a wind turbine structure including the above described platform and a turbine tower connected to the central support of the platform. The tower and the central support can be made of composite materials, and the tower can be received in a seat of the central support and operatively connected, such as adhesively bonded, to said seat with no metal connection parts between the tower and the support.

In accordance with the above, the object of the invention is a system for generating electric power and green hydrogen according to the claims.

The term green hydrogen is used hereinbelow to indicate hydrogen which is produced from renewable energy sources e.g. wind.

The present invention provides a unique system that combines wind-powered hydrolysis and green hydrogen production to cover energy needs of grids or isolated areas. Particularly, the invention provides a composite platform with integrated hydrogen storage for renewable energy on demand.

The system is configured to float on a waterbody and comprises a wind turbine; a generator coupled to the wind turbine for transforming the mechanical power output by the wind turbine into electric power; an electrolyzer configured to produce green hydrogen from water using electrical power from said generator.

The system is particularly advantageous because it combines green hydrogen production and electric power generation in a single unit exploiting a renewable energy source such as wind so that no carbon dioxide is emitted into the atmosphere. The system of the invention can be connected to a local electrical grid and be used to supply electric power to isolated areas acting as an energy island.

### Detailed description of the invention

The connection arms may include first connection arms which extend horizontally between the support and the toroidal body, and second connection arms which extend diagonally between the support and the toroidal body, each of said second connection arms being connected to the lower portion of the support at a connection point below the toroidal body.

Preferably the number of the first connection arms is equal to the number of the second connection arms. For example, in a preferred embodiment the number of the first connection arms is three and the number of second connection arms is three.

Any of the vertically arranged support, the toroidal body and one or more of the connection arms may have a hollow structure. The tower of the wind turbine typically has a hollow structure. The outer diameter of the horizontal ring structure could be as large as 60-70 m, while the diameter of the individual toroidal body and other tubes (legs and stabilizers) can rise to 6-7 m, with wall thicknesses of a few tens of centimeters.

A preferred feature of the invention is the use of a natural fibre-reinforced composite material (bio-composite).

Preferably, said bio-composite materials include hybrid glass and/or flax fabrics combined with fully recyclable thermoplastic acrylic-based composite systems obtained by using state of the art liquid thermoplastic resins and/or bio-based resin solutions and low toxicity resin solutions. A related advantage is reduction of CO2 footprint.

One or more of the vertically arranged support, the toroidal body, the connection arms and the tower of the turbine may be made of such composite material. Use of bio-composites can facilitate the use of adhesively bonded connections with the advantage of avoiding steel connections and related drawbacks such as corrosion.

Another preferred feature of the invention is the use of a hybrid composite material including natural fiber and glass fiber embedded in bio-based polymer resins and low toxicity resin solutions. A related advantage is inexpensive mass production and the potential for using natural fiber composites in a hybrid configuration with glass fiber composites for better durability. Particularly preferably the composite material is a sandwich including a layer of flax fibre pultruded elements with a protective coating layer of a glass fibre. The outer layer protects the flax fibers from environmental attacks.

In a preferred embodiment the support, the toroidal body and the connection arms are all made of one or more composite material(s). It should be noted however that the inventive system may also be used in combination with a conventional steel tower of a wind turbine.

Typically the vertically arranged support is cylindrical or substantially cylindrical.

The platform is preferably designed so that the buoyancy line of the platform in seawater intersects the toroidal body.

The torus is an important part of the structure. The torus can be manufactured, preferably, with the same technique described above of pultruded flax fibers internally and filament winding glass fibers externally in a sandwich configuration. Furthermore the torus may be made in segments to facilitate the transportation. On shore manufacturing close to the installation location is also possible due to the simple manufacturing methods. The torus can therefore be assembled on shore and connected to other parts of the platform such as the legs, the main cylinder and stabilizers before it is placed in the sea.

The weight of the floating platform is ca. 50% less than a conventional steel platform. For example the weight of the platform is estimated less than 1500 tons compared to ca. 3000 tons of a steel platform for a 10-15 MW turbine.

The torus diameter is ca. 65 m for a 10 MW wind turbine, which is smaller than a conventional steel platform for a wind turbine of the same power.

A further preferred feature of the invention is that the turbine tower is connected centrally to the floating platform. Accordingly, the platform is balanced offering better stability and the entire system can rotate around a central vertical axis to follow the wind. The floating platform is substantially symmetrical around a vertical axis allowing easy repositioning to follow the wind.

The vertical cylinder of the structure, which can be termed the main cylinder, the torus and the connection arms are preferably hollow structures so that the floating platform can be regarded as a large vessel. The lower part of the main cylinder may be used for accommodation of a ballast.

A further innovation concerns the connection of the tower to the platform. In the prior art, this is usually done with a metallic flange that connects the two structural components with metallic bolts, involving the above-mentioned drawbacks of possible corrosion. In an interesting embodiment of the invention, the tower extends down to the main cylinder of the platform; the tower and the main cylinder are operatively connected, using at least one adhesive, together internally to avoid having metallic elements, thereby avoiding corrosion. Similarly, a metal-free joint can be provided between the connection arms and the main torus and/or between the connection arms and the main cylinder.

For example in a preferred embodiment the tower has a first connection part and the main cylinder has a second connection part adapted to match with said first connection part, and said first connection part and second connection part are coupled to each other and adhesively connected without metallic elements.

The hollow structure of one or more of the structural components, for example of the toroidal element and the tower, offer space for accommodation. This can be profitable for lodging maintenance workers as well as other applications of the platform. For example the platform may be equipped with hydrogen and electric energy storage stations that can be used for recharging electric vessels.

One advantageous aspect of the design of the platform of the invention foresees the use of the vast empty space, which in some embodiments may extend up to 10'000 m³, inside the main cylinder and/or the toroidal body and/or at least some of the arms for fluid storage, such as pressurized hydrogen storage.

Hydrogen may be stored as a liquid or a gas. The term fluid is used indifferently to indicate a liquid or a gas. Storage of hydrogen as a gas is preferred to allow storage at a relatively low pressure.

One aspect of the invention relates to the use of the platform as herein disclosed for fluid storage, such as for hydrogen storage. In addition, batteries, fuel cells and electrolysers can be housed in this space. According to a related aspect of the invention, the main cylinder and/or the toroidal body and/or at least some of the arms are configured as storage tanks for fluid storage, particularly for pressurized hydrogen storage. Advantageously, the composite materials substantially composing the structures of the platform are particularly suitable to this task, in particular as structural materials for low-pressure fluid (e.g. hydrogen) storage tanks.

Additionally or alternatively, the platform and the turbine wind structure of the system of the present invention can be adapted and configured to operate as an energy island integrating one or more of electrolysis for green hydrogen production, fluid storage and a fuel cell with wind energy. Thanks to its modular design, the ease of transportation (due to modularity and light weight) and its versatility, the platform can be utilized for providing green electricity generation in isolated/remote locations, or may operate as a green hydrogen production hub/buffer for connected systems to the hydrogen distribution network.

Interestingly, in times of excess electricity production from wind, instead of curtailing electricity as is commonly done, it is possible to use this excess electricity to produce hydrogen through electrolysis. Accordingly, in the present invention, the wind turbine structure is adapted and configured so that the wind turbine is operatively coupled with an electrolyser, so that at least part of the energy produced by the wind turbine is used by an electrolyser for water electrolysis. Most preferably, the electrolyser is located in/on the platform of the invention. Still another aspect of the invention, therefore, relates to the use of the wind turbine of the wind turbine structure for production of hydrogen by electrolysis, the wind turbine being in operative relationship to a water electrolyser.

A further preferred feature of the invention concerns the mooring lines of the platform. In a preferred embodiment, a mooring line includes an anchor cable which forms a loop around one arm of the platform. Preferably, the anchor cable is made of a composite material. Said mooring line, thanks to the easy coupling with the structure of the platform, offers significant advantages in terms of cost.

The system of the invention is a system for generating electric power and green hydrogen comprising the above described floating platform and further comprising: a wind turbine; a generator coupled to the wind turbine and configured for transforming the mechanical power of the turbine into electrical power; an electrolyzer configured to produce green hydrogen from water using electrical power from the generator.

The wind turbine may have a tower rotationally coupled the connection seat of said floating platform.

Said system comprises a hydrogen storage chamber configured for collecting hydrogen gas at a selected storage pressure. Hydrogen may be stored at a storage pressure which may be the same as, or greater than, the production pressure of said electrolyzer. The green hydrogen produced by the electrolyzer may be raised to storage pressure by a suitable compressor.

Said hydrogen storage chamber is arranged within one of the connection arms of the platform and/or within said toroidal body of the platform. According to various embodiments, more than one hydrogen storage chamber may be provided in the above components of the platform. A hydrogen storage chamber may also be arranged in the vertical support.

The platform is configured to float on a waterbody, such as a lake or sea, particularly for offshore applications. The water for the production of green hydrogen can be taken from said waterbody. The system may include a water collection chamber and comprise a pumping apparatus configured for transferring water from the waterbody to said water collection chamber.

The system of the present invention can be configured as a standalone unit so that all the electric energy produced from the generator is used for the synthesis of green hydrogen.

The system of the invention can also be connected to an electrical grid, when available. When the system is connected to a grid, a part of the power generated by the turbine can be used for the synthesis and storage of hydrogen and a remaining part can be transferred to the grid. In other words, the energy produced by the turbine can be either stored as hydrogen gas (via the conversion into electrical energy and subsequent electrolysis of water) or transferred to a grid. The amount of power stored as hydrogen gas Vs. the power transferred to the grid can be varied according to circumstances such as instant demand, capacity of the turbine to produce power, amount of hydrogen currently stored, or other parameters.

For example energy can be used to produce and store hydrogen when the output of the wind turbine is greater than an instant demand. On the contrary when the demand exceeds the output of the turbine, electric energy can be produced from the stored hydrogen for example via a fuel cell.

According to a particularly interesting application the system further comprises a control system configured to adjust the amount of electrical power which is supplied to the electrical grid and the amount of water transferred to the water electrolyzer.

The system may include a fuel cell for conversion of hydrogen into electrical energy. Accordingly, hydrogen may be used as a means for storing the energy produced by the wind turbine. This can advantageously compensate the short-term fluctuation of the wind power and stabilize the output of the system.

The system of the present invention can be used for the production of renewable energy on demand. The invention provides a wind-powered production of green hydrogen which can be conveniently stored and used for production of renewable energy on demand. Hydrogen is stored preferably as a gas.

The system of the invention can be configured for transferring the energy to a grid or storing energy as hydrogen according to the circumstances, for example according to the demand of energy and the instant output of the wind turbine. The system of the invention can be particularly attractive for isolated areas serving as an energy island.

In some embodiments the system may include batteries as an additional means for storing electric energy.

### Description of the figures

Fig. 1 is a sketch of a wind turbine assembly including a floating platform.
Fig. 2 is a detail of Fig. 1 showing the floating platform.
Fig. 3 illustrates an exploded view of pre-assembled components of a floating platform.
Fig. 4 illustrates a preferred embodiment of a connection between the platform and the mooring lines.
Fig. 5 illustrates a detail of a cable attached to the platform.
Fig. 6 illustrates a schematic of a system for generation of power and hydrogen in accordance with an embodiment of the present invention.

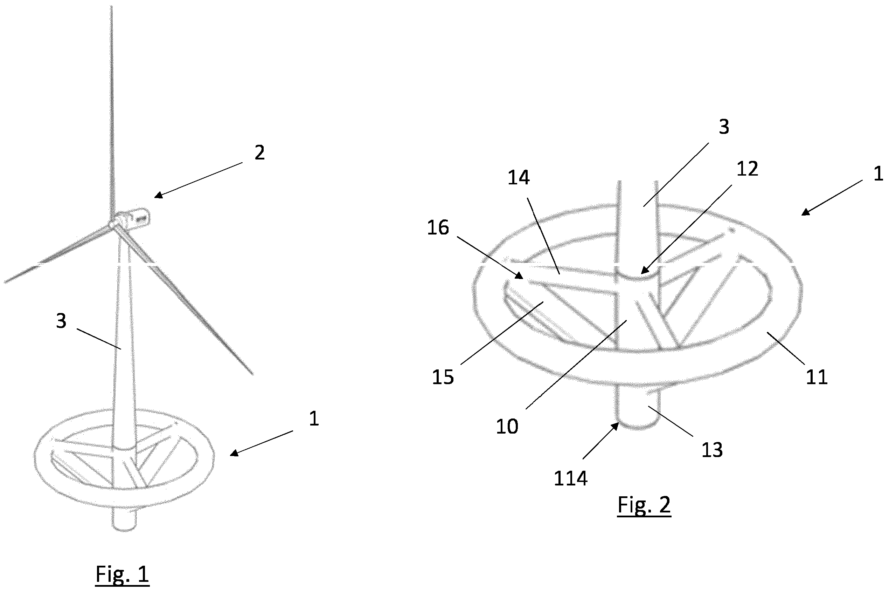

Fig. 1 illustrates a wind turbine assembly including a floating platform 1 and a wind turbine 2 mounted on a tower 3.

The floating platform 1 includes a vertically arranged support in the form of a main cylinder 10 and a toroidal body represented by a main torus 11. The torus 11 is coaxial to the main cylinder 10 and has a connection seat 12 for connection with the tower 3. The main cylinder 10 has also a lower part 13 extending below the torus 11 with a lower end connection 114 for a ballast. In use, the buoyancy line is normally at the torus 11 and the lower part 13 of the torus is below the water level.

The platform 1 further comprises a plurality of connection elements which extends radially between the main support 10 and the torus 11. In the example, said connection elements include radial arms 14 and inclined arms 15.

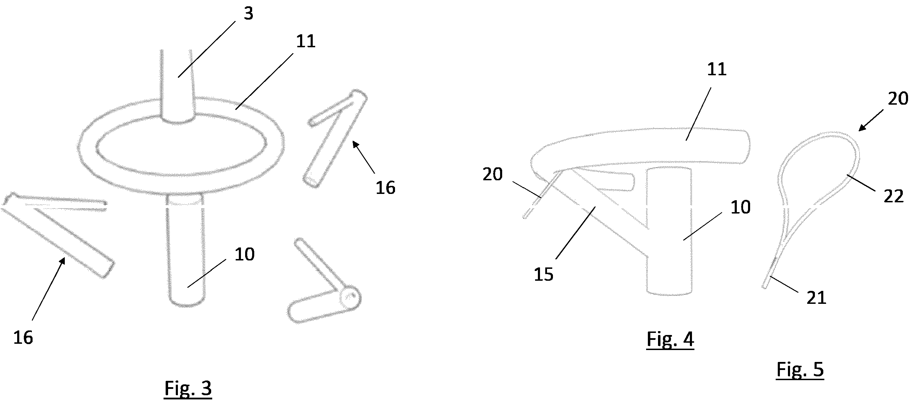

Preferably the radial arms 14 and the inclined arms 15 are part of a V-shaped pre-assembled structure 16 as shown in Fig. 3. More particularly, Fig. 3 illustrates an embodiment wherein the tower 3, the main torus 11, the main cylinder 10 and the radial arms 16 are pre-assembled elements.

A suitable mooring line may be attached to the main torus and/or to one of the arms when appropriate. The platform may also include barge-like elements to compensate tipping.

In accordance with the preferred embodiment, the main cylinder 10 and/or the torus 11 and/or at least some of the arms 14, 15 are hollow structures.

Particularly preferably, said elements are made of a composite material such as a sandwich structure including a layer of flax fibre pultruded elements with a protective coating layer of a glass fibre.

Figs. 4 and 5 disclose a mooring line 20 of the floating platform 1. The mooring line 20 includes an anchor cable 21 and a loop 22 around one arm of the platform 1 or around the torus 11.

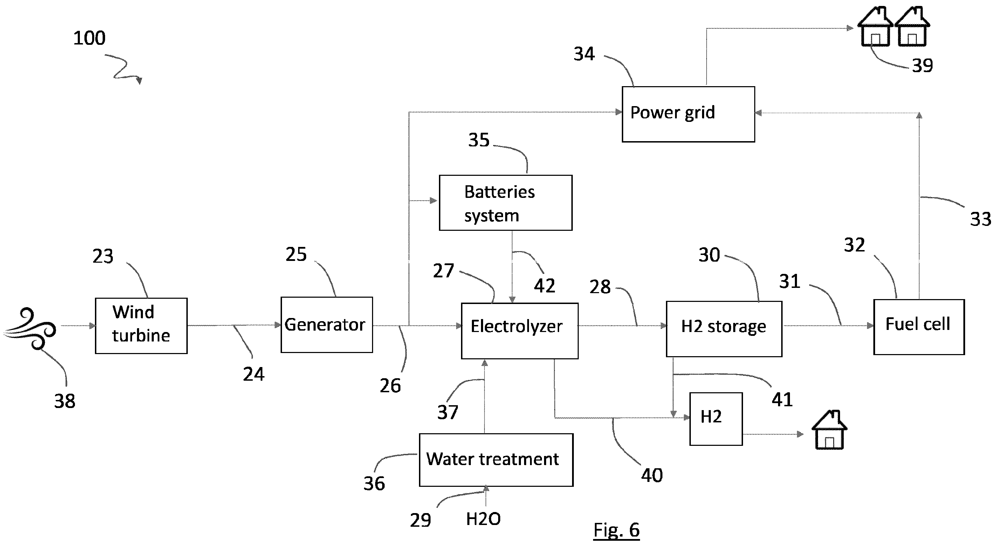

Fig. 6 illustrated a system 100 for the generation of hydrogen and electric power, which may be hosted in the platform 1 as above described.

Said system 100 comprises a wind turbine 23 to transform wind power 38 into a mechanical power output 24, a generator 25 coupled to the wind turbine 23 to convert the mechanical power output 24 into electrical power 26, an electrolyzer 27 connected to the generator 25 and configured to produce hydrogen 28 from a water feed 37 using at least a portion of the electrical power output 26 of said generator 25.

The system further includes a water treatment unit 36 configured to produce the water feed 37 by purifying a water stream 29 taken from a suitable source. The water stream 29 can be for instance seawater and the water treatment unit 36 can be a desalinization unit configured to produce a water feed which is free or substantially free of sodium chloride.

The system 100 further includes a hydrogen storage unit 30 which is in communication with the electrolyzer 27, a fuel cell 32 which is in communication with the hydrogen storage unit 30, a batteries system 35 which is connected to an output of the generator 25 and to an input of the electrolyzer 27. Said hydrogen storage unit 30 may include one or more hydrogen storage chambers.

The hydrogen 28 produced by the electrolyzer 27 can be supplied to the hydrogen storage unit 30. A compressor can be also provided prior to the hydrogen storage unit 30 to store hydrogen as a compressed gas.

A hydrogen stream 31 from the storage unit 30 can be supplied to the fuel cell 32 to produce electrical power 33.

The system is connected to an electrical power grid 34 so that said grid 34 can receive electrical power 26 from the generator and/or from the fuel cell 32 and provide power to one or more utilities 39.

In operation, the electrical power 26 can be supplied to one or more of the grid 34, the batteries system 35 and the electrolyzer 27.

A control system which is not represented in the figure is used to determine the amount of power that is supplied to each of the above-mentioned units according to the circumstances such as for instant the demand of electric power of the utilities, the capacity of the wind turbine to produce power, and the amount of hydrogen currently stored.

The control system can also decide to supply the entire electrical power available to just one or some of the above-mentioned units e.g. to the electrolyzer or to the electrolyzer 27 and to the batteries system 35.

A hydrogen stream 40 from the electrolyzer and a hydrogen stream 41 withdrawn from H2 storage unit 30 can also be exported outside the plant. In some embodiments a hydrogen stream exported from the plant can be sent to local users via a distribution grid as illustrated in Fig. 6. Accordingly, a user connected to said grid may receive a hydrogen stream for local conversion into electricity with a fuel cell or for a different use. This option may be of particular interest in remote island applications.

The production of electric power 33 by the fuel cell 32 is particularly advantageous to provide electric power even when the wind power 38 is not available. Electrical power 42 can also be supplied from the batteries system 35 to the electrolyzer 27 when needed.

## Claims

1. A system (100) for generating electric power (26) and hydrogen (28) comprising:
a floating platform (1) configured to float on a waterbody;
a wind turbine (23) supported by said floating platform (1);
a generator (25) coupled to the wind turbine configured for transforming the mechanical power output (24) of said turbine into electrical power (26);
an electrolyzer (27) configured to produce hydrogen (28) from water (29) using electrical power (26) produced by said generator (25);
at least one hydrogen storage chamber (30) configured for collecting said hydrogen (28) generated by the electrolyzer (27);
wherein said floating platform (1) comprises:
a vertically arranged support (10) of said wind turbine (23);
**characterized in that** said floating platform further comprises:
a toroidal body (11) arranged coaxially around said support (10), so that a vertical axis of the support (10) passes through the centre of the toroidal body (11);
the support (10) having a connection seat (12) for a tower (3) of said wind turbine (23) and a lower portion (13) which extends below the toroidal body (11);
the platform further comprising a plurality of connection arms (14, 15) which extends radially between the support (10) and the toroidal body (11) so that the support and the toroidal body are rigidly connected by said arms,
wherein the toroidal body (11) and the connection arms (14, 15) are made of a composite material which is a reinforced polymer material,
wherein the at least one hydrogen storage chamber (30) includes a chamber which is arranged within one of the connection arms (14, 15) of the platform and/or within the toroidal body (11).

2. A system according to claim 1 wherein said connection arms include first connection arms (14) which extend horizontally between the support (10) and the toroidal body (11), and second connection arms (15) which extend diagonally between the support and the toroidal body, each of said second connection arms (15) being connected to the lower portion (13) of the support (10) at a connection point below the toroidal body (11).

3. A system according to claim 2 wherein the number of the first connection arms (14) is equal to the number of the second connection arms (15).

4. A system according to claim 3 wherein the number of the first connection arms (14) is three and the number of second connection arms (15) is three.

5. A system according to any of the previous claims wherein at least one of the vertically arranged support (10), the toroidal body (11) and the connection arms (14, 15) has a hollow structure.

6. A system according to any of the previous claims wherein at least one of the support (10), the toroidal body (11) and the connection arms (14, 15) is made of a composite material which is a natural fibre reinforced composite material.

7. A system according to claim 6 wherein said composite material includes at least a natural fiber and a glass fiber.

8. A system according to claim 7 wherein said composite material includes a sandwich structure including a layer of flax fibre pultruded elements with a protective coating layer of a glass fibre.

9. A system according to any of the previous claims wherein the support (10), the toroidal body (11) and the connection arms (14, 15) are all made of one or more composite material(s).

10. A system according to any of the previous claims wherein the vertically arranged support (10) is cylindrical or substantially cylindrical.

11. A system according to any of the previous claims wherein the vertically arranged support (10) includes a lower end connection (114) for a ballast.

12. A system according to any of the previous claims, wherein the buoyancy line of the platform in seawater intersects the toroidal body.

13. A system according to any of the previous claims including at least one mooring line which includes a cable (21) and said cable forms a loop (22) around one arm (15) of the platform, said cable being preferably made of a composite material.

14. A system according to any of the previous claims, including a turbine tower (3) connected to the central support of the platform, wherein the tower and the central support are made of composite materials, and the tower is received in the connection seat of the central support and operatively connected by at least one adhesive, to said connection seat with no metal connection parts between the tower and the support.

15. System (100) according to any of claims 1 to 14, wherein hydrogen (28) is stored as gas at a storage pressure greater than the hydrogen production pressure, the system comprising a compressor to raise the pressure of hydrogen so said storage pressure.

16. System (100) according to any of claims 1 to 15 further including a fuel cell (32) for conversion of stored hydrogen (31) into electrical power (33).

17. System (100) according to any of claims 1 to 16, further including one or more batteries (35) for storing electric power (26) produced by said electrical generator (25).

18. System (100) according to any of claims 1 to 17, wherein said generator (25) is connected to an electrical grid (34) and said system further includes a control system configured to regulate the amount of electrical power supplied to the electrolyzer (27) and to said electrical grid (34).

19. Use of a system (100) according to any of claims 1 to 18 for the production of renewable energy on demand, by converting wind energy into electric energy and by transferring said electric energy to a grid and/or storing said energy by means of production of hydrogen via electrolysis and storage of said hydrogen.

## Patentansprüche

1. System (100) zur Erzeugung von elektrischer Energie (26) und Wasserstoff (28), aufweisend:
eine schwimmende Plattform (1), die dazu ausgebildet ist, auf einem Gewässer zu schwimmen;
eine Windkraftanlage (23), die von der schwimmenden Plattform (1) gestützt wird;
einen mit der Windkraftanlage gekoppelten Generator (25), der dazu ausgebildet ist, die mechanische Leistungsabgabe (24) der Windkraftanlage in elektrische Energie (26) umzuwandeln;
einen Elektrolyseur (27), der dazu ausgebildet ist, unter Verwendung der von dem Generator (25) erzeugten elektrischen Energie (26) Wasserstoff (28) aus Wasser (29) zu erzeugen;
mindestens eine Wasserstoffspeicherkammer (30), die dazu eingerichtet ist, den vom Elektrolyseur (27) erzeugten Wasserstoff (28) zu sammeln;
wobei die schwimmende Plattform (1) aufweist:
eine vertikal angeordnete Stütze (10) der Windkraftanlage (23);
**dadurch gekennzeichnet, dass** die schwimmende Plattform ferner aufweist:
einen toroidalen Körper (11), der koaxial um die Stütze (10) angeordnet ist, so dass eine vertikale Achse der Stütze (10) durch den Mittelpunkt des toroidalen Körpers (11) verläuft;
wobei die Stütze (10) einen Verbindungssitz (12) für einen Turm (3) der Windkraftanlage (23) und einen unteren Teil (13) aufweist, der sich unterhalb des toroidalen Körpers (11) erstreckt;
wobei die Plattform ferner eine Vielzahl von Verbindungsarmen (14, 15) aufweist, die sich radial zwischen der Stütze (10) und dem toroidalen Körper (11) erstrecken, so dass die Stütze und der toroidale Körper durch die Arme starr verbunden sind,
wobei der toroidale Körper (11) und die Verbindungsarme (14, 15) aus einem Verbundwerkstoff hergestellt sind, der ein verstärktes Polymermaterial ist,
wobei die mindestens eine Wasserstoffspeicherkammer (30) eine Kammer umfasst, die innerhalb eines der Verbindungsarme (14, 15) der Plattform und/oder innerhalb des toroidalen Körpers (11) angeordnet ist.

2. System nach Anspruch 1, wobei die Verbindungsarme erste Verbindungsarme (14), die sich horizontal zwischen der Stütze (10) und dem toroidalen Körper (11) erstrecken, und zweite Verbindungsarme (15) umfasst, die sich diagonal zwischen der Stütze und dem toroidalen Körper erstrecken, wobei jeder der zweiten Verbindungsarme (15) mit dem unteren Teil (13) der Stütze (10) an einem Verbindungspunkt unterhalb des toroidalen Körpers (11) verbunden ist.

3. System nach Anspruch 2, wobei die Anzahl der ersten Verbindungsarme (14) gleich der Anzahl der zweiten Verbindungsarme (15) ist.

4. System nach Anspruch 3, wobei die Anzahl der ersten Verbindungsarme (14) drei beträgt und die Anzahl der zweiten Verbindungsarme (15) drei beträgt.

5. System nach einem der vorhergehenden Ansprüche, wobei mindestens eines der vertikal angeordneten Stützen (10), des toroidalen Körpers (11) und der Verbindungsarme (14, 15) eine Hohlstruktur aufweist.

6. System nach einem der vorhergehenden Ansprüche, wobei mindestens eines der Stützen (10), des toroidalen Körpers (11) und der Verbindungsarme (14, 15) aus einem Verbundwerkstoff hergestellt ist, der ein naturfaserverstärkter Verbundwerkstoff ist.

7. System nach Anspruch 6, wobei der Verbundwerkstoff mindestens eine Naturfaser und eine Glasfaser umfasst.

8. Ein System gemäß Anspruch 7, wobei der Verbundwerkstoff eine Sandwichstruktur umfasst, die eine Schicht aus pultrudierten Flachsfaserelementen mit einer Schutzbeschichtung aus Glasfaser umfasst.

9. System nach einem der vorhergehenden Ansprüche, wobei die Stütze (10), der toroidaler Körper (11) und die Verbindungsarme (14, 15) alle aus einem oder mehreren Verbundwerkstoffen hergestellt sind.

10. System nach einem der vorhergehenden Ansprüche, wobei die vertikal angeordnete Stütze (10) zylindrisch oder im Wesentlichen zylindrisch ist.

11. System nach einem der vorhergehenden Ansprüche, wobei die vertikal angeordnete Stütze (10) eine untere Endverbindung (114) für einen Ballast umfasst.

12. System nach einem der vorhergehenden Ansprüche, wobei die Auftriebslinie der Plattform im Meerwasser den toroidalen Körper schneidet.

13. System nach einem der vorhergehenden Ansprüche, das mindestens eine Verankerungsleine umfasst, die ein Kabel (21) umfasst, wobei das Kabel eine Schleife (22) um einen Arm (15) der Plattform bildet, wobei das Kabel vorzugsweise aus einem Verbundwerkstoff besteht.

14. System nach einem der vorhergehenden Ansprüche, das einen Turbinenturm (3) umfasst, der mit der zentralen Stütze der Plattform verbunden ist, wobei der Turm und die zentrale Stütze aus Verbundwerkstoffen bestehen und der Turm in den Verbindungssitz der zentralen Stütze aufgenommen und durch mindestens einen Klebstoff funktionsfähig mit dem Verbindungssitz verbunden ist, ohne dass Metallverbindungsteile zwischen dem Turm und der Stütze vorhanden sind.

15. System (100) gemäß einem der Ansprüche 1 bis 14, wobei Wasserstoff (28) als Gas bei einem Speicherdruck gespeichert wird, der größer ist als der Wasserstoffproduktionsdruck, wobei das System einen Kompressor aufweist, um den Druck des Wasserstoffs auf den Speicherdruck zu erhöhen.

16. System (100) gemäß einem der Ansprüche 1 bis 15, das ferner eine Brennstoffzelle (32) zur Umwandlung von gespeichertem Wasserstoff (31) in elektrische Energie (33) umfasst.

17. System (100) gemäß einem der Ansprüche 1 bis 16, das ferner eine oder mehrere Batterien (35) zum Speichern von durch den Generator (25) erzeugter elektrischer Energie (26) umfasst.

18. System (100) gemäß einem der Ansprüche 1 bis 17, wobei der Generator (25) mit einem Stromnetz (34) verbunden ist und das System ferner ein Steuersystem umfasst, das dazu ausgebildet ist, die dem Elektrolyseur (27) und dem Stromnetz (34) zugeführte elektrische Energie zu regulieren.

19. Verwendung eines Systems (100) gemäß einem der Ansprüche 1 bis 18 zur Erzeugung von erneuerbarer Energie auf Abruf durch Umwandlung von Windenergie in elektrische Energie und durch Übertragung der elektrischen Energie an ein Netz und/oder Speicherung der Energie durch Erzeugung von Wasserstoff mittels Elektrolyse und Speicherung des Wasserstoffs.

## Revendications

1. Système (100) pour générer de l'énergie électrique (26) et de l'hydrogène (28) comprenant :
une plateforme flottante (1) configurée pour flotter sur un plan d'eau ;
une éolienne (23) supportée par ladite plateforme flottante (1) ;
un générateur (25) couplé à l'éolienne et configuré pour transformer la puissance mécanique de sortie (24) de ladite éolienne en énergie électrique (26) ;
un électrolyseur (27) configuré pour produire de l'hydrogène (28) à partir d'eau (29) en utilisant l'énergie électrique (26) produite par ledit générateur (25) ;
au moins une chambre de stockage d'hydrogène (30) configurée pour recueillir ledit hydrogène (28) généré par l'électrolyseur (27) ;
dans lequel ladite plateforme flottante (1) comprend :
un support (10) disposé verticalement de ladite éolienne (23) ;
**caractérisé en ce que** ladite plateforme flottante comprend en outre :
un corps toroïdal (11) disposé coaxialement autour dudit support (10), de sorte qu'un axe vertical du support (10) passe par le centre du corps toroïdal (11) ;
le support (10) ayant un logement de connexion (12) pour une tour (3) de ladite éolienne (23) et une portion inférieure (13) qui s'étend au-dessous du corps toroïdal (11) ;
la plateforme comprenant en outre une pluralité de bras de liaison (14, 15) qui s'étendent radialement entre le support (10) et le corps toroïdal (11) de sorte que le support et le corps toroïdal sont rigidement reliés par lesdits bras,
dans lequel le corps toroïdal (11) et les bras de liaison (14, 15) sont constitués d'un matériau composite qui est un matériau polymère renforcé,
dans lequel l'au moins une chambre de stockage d'hydrogène (30) comprend une chambre qui est disposée à l'intérieur de l'un des bras de liaison (14, 15) de la plateforme et/ou à l'intérieur du corps toroïdal (11).

2. Système selon la revendication 1, dans lequel lesdits bras de liaison comprennent des premiers bras de liaison (14) qui s'étendent horizontalement entre le support (10) et le corps toroïdal (11), et des seconds bras de liaison (15) qui s'étendent en diagonale entre le support et le corps toroïdal, chacun desdits seconds bras de liaison (15) étant relié à la portion inférieure (13) du support (10) en un point de connexion au-dessous du corps toroïdal (11).

3. Système selon la revendication 2, dans lequel le nombre des premiers bras de liaison (14) est égal au nombre des seconds bras de liaison (15).

4. Système selon la revendication 3, dans lequel le nombre des premiers bras de liaison (14) est de trois et le nombre des seconds bras de liaison (15) est de trois.

5. Système selon l'une quelconque des revendications précédentes, dans lequel au moins l'un parmi le support (10) disposé verticalement, le corps toroïdal (11) et les bras de liaison (14, 15) a une structure creuse.

6. Système selon l'une quelconque des revendications précédentes, dans lequel l'au moins l'un parmi le support (10), le corps toroïdal (11) et les bras de liaison (14, 15) est constitué d'un matériau composite qui est un matériau composite renforcé de fibres naturelles.

7. Système selon la revendication 6, dans lequel ledit matériau composite comprend au moins une fibre naturelle et une fibre de verre.

8. Système selon la revendication 7, dans lequel ledit matériau composite comprend une structure sandwich comprenant une couche d'éléments pultrudés en fibre de lin avec une couche de revêtement protectrice en fibre de verre.

9. Système selon l'une quelconque des revendications précédentes, dans lequel le support (10), le corps toroïdal (11) et les bras de liaison (14, 15) sont tous constitués d'un ou de plusieurs matériau(x) composite(s).

10. Système selon l'une quelconque des revendications précédentes, dans lequel le support (10) disposé verticalement est cylindrique ou sensiblement cylindrique.

11. Système selon l'une quelconque des revendications précédentes, dans lequel le support (10) disposé verticalement comprend une connexion d'extrémité inférieure (114) pour un lest.

12. Système selon l'une quelconque des revendications précédentes, dans lequel la ligne de flottaison de la plateforme en eau de mer intersecte le corps toroïdal (11).

13. Système selon l'une quelconque des revendications précédentes comprenant au moins une ligne d'amarrage qui comprend un câble (21) et ledit câble forme une boucle (22) autour d'un bras (15) de la plateforme, ledit câble étant de préférence constitué d'un matériau composite.

14. Système selon l'une quelconque des revendications précédentes, comprenant une tour de turbine (3) reliée au support central de la plateforme, dans lequel la tour et le support central sont constitués de matériaux composites, et la tour est insérée dans le logement de connexion du support central et reliée de manière fonctionnelle, par au moins un adhésif, audit logement de connexion sans pièces de connexion métalliques entre la tour et le support.

15. Système (100) selon l'une quelconque des revendications 1 à 14, dans lequel l'hydrogène (28) est stocké sous forme de gaz à une pression de stockage supérieure à la pression de production d'hydrogène, le système comprenant un compresseur pour augmenter la pression de l'hydrogène à ladite pression de stockage.

16. Système (100) selon l'une quelconque des revendications 1 à 15 comprenant en outre une pile à combustible (32) pour la conversion de l'hydrogène stocké (31) en énergie électrique (33).

17. Système (100) selon l'une quelconque des revendications 1 à 16, comprenant en outre une ou plusieurs batteries (35) pour stocker l'énergie électrique (26) produite par ledit générateur électrique (25).

18. Système (100) selon l'une quelconque des revendications 1 à 17, dans lequel ledit générateur (25) est connecté à un réseau électrique (34) et ledit système comprend en outre un système de commande configuré pour réguler la quantité d'énergie électrique fournie à l'électrolyseur (27) et audit réseau électrique (34).

19. Utilisation d'un système (100) selon l'une quelconque des revendications 1 à 18 pour la production d'énergie renouvelable à la demande, en convertissant l'énergie éolienne en énergie électrique et en transférant ladite énergie électrique à un réseau et/ou en stockant ladite énergie au moyen de la production d'hydrogène via l'électrolyse et du stockage dudit hydrogène.
